# EUROPÄISCHE PATENTSCHRIFT

(11) **EP 2 960 128 B1**
(45) Veröffentlichungstag und Bekanntmachung des Hinweises auf die Patenterteilung: **08.08.2018**
(21) Anmeldenummer: 15001859.6
(22) Anmeldetag: 23.06.2015
(51) Int. Cl.: B60W 30/06, B62D 15/02, B60W 10/20, B60W 10/22, B60G 17/0195

(54) **VERFAHREN ZUM BETRIEB EINES KRAFTFAHRZEUGS UND KRAFTFAHRZEUG**
METHOD FOR OPERATING A MOTOR VEHICLE AND MOTOR VEHICLE
PROCEDE DESTINE AU FONCTIONNEMENT D'UN VEHICULE AUTOMOBILE ET VEHICULE AUTOMOBILE

(30) Priorität: 27.06.2014 DE 102014009591
(43) Veröffentlichungstag der Anmeldung: 30.12.2015
(73) Patentinhaber: AUDI AG, 85045 Ingolstadt (DE)
(72) Erfinder: Popken, Markus, DE - 85080 Gaimersheim (DE); Schuder, Claudia, DE - 85049 Ingolstadt (DE)
(74) Vertreter: Thielmann, Frank

(56) Entgegenhaltungen:
- EP-A1- 1 642 767
- EP-A1- 2 327 574
- DE-A1-102009 053 807
- US-B1- 6 233 510

## Beschreibung

Die Erfindung betrifft ein Verfahren zum Betrieb eines Kraftfahrzeugs, wobei in einem Steuergerät die Umgebung des Kraftfahrzeugs beschreibende Umgebungsdaten, insbesondere Sensordaten, zu einem die Umgebung des Kraftfahrzeugs beschreibenden Umgebungsmodell fusioniert werden. Daneben betrifft die Erfindung ein Kraftfahrzeug.

Moderne Kraftfahrzeuge weisen eine Vielzahl von Fahrzeugsystemen auf, die sowohl auf die Optimierung des Fahrgefühls durch den Fahrer selbst als auch auf die Übernahme von Fahrfunktionen des Kraftfahrzeugs von dem Fahrer abzielen. Bekannte Vertreter solcher Fahrzeugsysteme sind Fahrerassistenzsysteme, beispielsweise längsführende Fahrerassistenzsysteme wie ACC-Systeme, querführende Fahrerassistenzsysteme wie Spurhaltesysteme, und dergleichen. Viele derartige Fahrzeugsysteme benötigen zur Durchführung ihrer Funktion Informationen über die Umgebung des Kraftfahrzeugs, beispielsweise das Vorhandensein und die Bewegung anderer Objekte, Wetterbedingungen, die Beschaffenheit des Untergrunds, auf dem das Kraftfahrzeugs fährt und dergleichen.

In diesem Kontext wurde bereits, beispielsweise in der DE 10 2009 053 807 A1, vorgeschlagen, Umgebungsdaten des Kraftfahrzeugs, wie sie vornehmlich von Umgebungssensoren ermittelt werden, in einem Umgebungsmodell (häufig auch Umfeldmodell genannt) des Kraftfahrzeugs zusammenzufassen. Ein derartiges Umgebungsmodell des Kraftfahrzeugs kann die durch das Umgebungsmodell beschriebene, definierte Umgebung des Kraftfahrzeugs beispielsweise in Form einer sogenannten Belegungskarte wiedergeben, in der verschiedenen Umgebungsanteilen die Information zugeordnet wird, ob sie durch ein Objekt belegt sind oder nicht, wobei häufig dieser Belegungsinformation noch weitere Informationen zugeordnet sind, beispielsweise über die Beschaffenheit des belegenden Objekts. Ein anderer Ansatz, der gegebenenfalls auch zusätzlich zu einer Belegungskarte verwendet werden kann, ist die objektbasierte Beschreibung der definierten Umgebung des Kraftfahrzeugs, in der mithin für alle Objekte in der definierten Umgebung ein Datensatz vorhanden ist, der die Position, Ausdehnung sowie weitere Daten des jeweiligen Objekts beschreibt. Neben den Daten von Umgebungssensoren können auch Daten von Navigationssystemen in ein derartiges Umgebungsmodell eingehen, nachdem die Beschaffenheit der Umgebung häufig auch aus digitalen Kartendaten teilweise abgeleitet werden kann, die aufgrund einer durch einen Positionssensor bestimmten Position des Kraftfahrzeugs zugeordnet werden können.

Dabei wurde bereits vorgeschlagen, das Umgebungsmodell in einem bestimmten, einzigen Steuergerät zusammenzufassen und bereit zu stellen; es sind jedoch auch Ausgestaltungen bekannt, in denen das Umgebungsmodell durch Zusammenwirken mehrerer Steuergeräte des Kraftfahrzeugs erstellt und aktuell gehalten wird.

Problematisch bei derartigen Umgebungsmodellen ist heutzutage noch, dass die Umgebungssensoren und die digitalen Kartendaten nicht immer alle Hindernisse oder Unebenheiten im Fahrzeugumfeld grundsätzlich oder hinreichend genau erfassen können. Dies gilt insbesondere für schwerer detektierbare Objekte wie tiefe Schlaglöcher oder Bordsteine, die jedoch zu Beschädigungen an den Reifen oder der Karosserie führen können.

Aus der EP 2 327 574 A1 ist ein Verfahren zur Unterstützung eines Fahrers eines Fahrzeugs bei einem Fahrmanöver zur Überwindung eines Hindernisses bekannt. Bei dem EP 2 327 574 A1 werden sowohl Umgebungssensoren als auch Fahrwerksensoren eingesetzt. Der Erfindung liegt daher die Aufgabe zugrunde, die Qualität eines Umgebungsmodells des Kraftfahrzeugs, auf das Funktionen anderer Fahrzeugsysteme zugreifen, insbesondere in Bezug auf den durch das Kraftfahrzeug befahrenen Untergrund zu verbessern.

Zur Lösung dieser Aufgabe ist bei einem Verfahren der eingangs genannten Art erfindungsgemäß vorgesehen, dass in die Ermittlung des Umgebungsmodells Höhenunterschiede des durch das Kraftfahrzeug befahrenen Untergrundes beschreibende, von einem Fahrwerksystem des Kraftfahrzeugs ermittelte Fahrwerksdaten eingehen.

Es wurde erkannt, dass wenigstens dann, wenn der entsprechende Untergrund durch wenigstens einen Reifen des Kraftfahrzeugs überfahren wird, Unebenheiten über die Fahrwerksensorik ohnehin erkannt werden. Mithin wird vorgeschlagen, das Umgebungsmodell zu verbessern, indem Höhenunterschiede des befahrenen Untergrunds beschreibende Fahrwerksdaten ebenso in die Ermittlung und Aktualisierung des Umgebungsmodells eingehen, insbesondere neben den üblicherweise verwendeten Sensordaten von Umgebungssensoren und digitalen Kartendaten eines Navigationssystems. Die Fahrwerksdaten können dabei sowohl zur Korrektur von bereits erkannten Objekten, beispielsweise Bordsteinen, als auch zum Erkennen neuer Objekte, beispielsweise von Schlaglöchern, eingesetzt werden. Diese zusätzliche Information steht wie das Umgebungsmodell an sich grundsätzlich allen Funktionen zur Verfügung, die basierend auf den Sensorfusionsdaten des Umgebungsmodells arbeiten. Beispielsweise können so Beschädigungen von Reifen und/oder Karosserie vermieden werden, wie im Folgenden noch näher dargestellt werden wird.

Dabei können bevorzugt die Fahrwerksdaten für ein Merkmal des Untergrunds beim Überfahren des Merkmals mit wenigstens einem Rad des Kraftfahrzeugs ermittelt werden. Bestimmte Fahrwerkssensoren des Fahrwerksystems sprechen auf Unebenheiten an, sobald diese von einem Reifen des Kraftfahrzeugs überfahren werden. Mithin werden die Reifen des Kraftfahrzeugs letztlich genutzt, um den Untergrund unter dem Kraftfahrzeug auf besondere Merkmale, insbesondere Höhenunterschiede aufweisende Merkmale, abzutasten. Dabei kann eine Ortszuordnung der Fahrwerksdaten leicht aus bekannten Positionsdaten des überfahrenden Rads ermittelt werden, so dass auch eine Zuordnung in dem Umgebungsmodell problemlos möglich ist. In der Summe wird mithin eine ohnehin vorhandene Fahrwerkssensorik bzw. die von ihr ermittelten Fahrwerksdaten eingesetzt, um die Beschreibung der Umgebung in dem Umgebungsmodell zu verbessern, so dass die Fahrwerkssensorik einem weiteren Zweck dient.

In vorteilhafter Ausgestaltung der Erfindung kann vorgesehen sein, dass eine aus den Fahrwerksdaten abgeleitete Information von wenigstens einer auf eine Vermeidung von Beschädigungen des Kraftfahrzeugs, insbesondere der Reifen und/oder zum wenigstens teilweise autonomen Betrieb des Kraftfahrzeugs ausgebildeten Funktion eines Fahrzeugsystems des Kraftfahrzeugs ausgewertet wird. Verschiedene Funktionen können mithin die durch die Fahrwerksdaten erhaltene Zusatzinformation nutzen, um unkomfortable und/oder das Kraftfahrzeug gegebenenfalls beschädigende Bereiche im Falle von automatischen Fahreingriffen zu umfahren und/oder Warnungen an den Fahrer auszugeben.

Konkret kann vorgesehen sein, dass wenigstens eine aus den Fahrwerksdaten abgeleitete, auf ein Merkmal des Untergrunds bezogene Information des Umgebungsmodells zur Warnung des Fahrers vor einem Überfahren des Merkmals mit wenigstens einem Rad und/oder zur Verhinderung und/oder Optimierung des Überfahrens des Merkmals durch wenigstens einen Fahreingriff ausgewertet wird. Dabei sei hervorgehoben, dass die Tatsache, dass ein Merkmal bereits durch ein Rad überfahren werden muss, um dessen Eigenschaften bezüglich der Höhe zu bestimmen, der nutzbringenden Auswertung der gewonnen Daten nicht entgegensteht. Überfährt beispielsweise ein Vorderrad in einem für das Vorderrad unkritischen Winkel einen Bordstein, dessen Höhe von anderen Umgebungssensoren, beispielsweise einer Kamera, nicht korrekt eingeschätzt wurde, detektiert das Fahrwerkssystem beim Überfahren die Höhe des Bordsteins, so dass in dem bordeigenen Umgebungsmodell unter Nutzung der Fahrwerksdaten der Höhenwert eingetragen bzw. korrigiert werden kann. Dann kann durch eine Funktion eines Fahrzeugsystems, insbesondere eines Fahrerassistenzsystems, verhindert werden, dass das Hinterrad, welches mit ungünstigerem Winkel über diesen Bordstein fahren wird, beschädigt wird, wenn vorher der Fahrer gewarnt wird oder das Kraftfahrzeug aktiv ein Überfahren verhindert bzw. den Winkel durch einen Lenkeingriff optimiert, allgemein gesagt also ein Fahreingriff durchgeführt wird. Insgesamt kann also gesagt werden, dass bei Ermittlung der Fahrwerksdaten durch Überfahren des Merkmals mit einem bestimmten Rad eine Warnung des Fahrers vor einem Überfahren des Merkmals mit einem weiteren Rad und/oder vor einem erneuten Überfahren mit dem bestimmten Rad ausgegeben werden kann und/oder dies durch geeignete Fahreingriffe verhindert und/oder optimiert wird.

Konkret kann vorgesehen sein, dass die Fahrwerksdaten aus Sensordaten wenigstens eines Höhenstandsensors des Fahrwerkssystems und/oder eines eine vertikale Beschleunigung messenden Beschleunigungssensors des Fahrwerksystems ermittelt werden. Neben den genannten Beispielen können selbstverständlich auch die Sensordaten anderer Sensoren eines Fahrwerksystems ausgewertet werden, mithilfe derer eine Höhenbeschreibung möglich ist, beispielsweise die Messwerte von Neigungssensoren im Kontext zu Odometriedaten des Kraftfahrzeugs und dergleichen.

Wie bereits erwähnt, können die Fahrwerksdaten eingesetzt werden, um bislang noch nicht bekannte Informationen über Objekte/Merkmale in der Umgebung des Kraftfahrzeugs hinzuzufügen, meist ist es jedoch so, dass die Daten von Umgebungssensoren bereits eine grundsätzliche Information liefern, die jedoch ungenau und/oder lediglich abgeschätzt ist, so dass die Nutzung der Fahrwerksdaten insbesondere zur Korrektur bereits vorhandener Daten im Umgebungsmodell eingesetzt werden können, beispielsweise zur Korrektur der Höhe eines Objekts, insbesondere eines Bordsteins, in dem Umgebungsmodell verwendet werden können. Diesbezüglich können die Fahrwerksdaten im Sinne eines Korrektivs für das Umgebungsmodell aufgefasst werden, welches dieses optimiert.

Neben dem Verfahren betrifft die Erfindung auch ein Kraftfahrzeug, aufweisend wenigstens ein zur Durchführung des erfindungsgemäßen Verfahrens ausgebildetes Steuergerät. Dabei kann es sich um ein einzelnes, zentrales Steuergerät handeln, auf dem das Umgebungsmodell verwaltet wird, es ist jedoch auch denkbar, das Umgebungsmodell durch Zusammenwirken mehrerer Steuergeräte zu betreuen. Sämtliche Ausführungen bezüglich des erfindungsgemäßen Verfahrens lassen sich analog auf das erfindungsgemäße Kraftfahrzeug übertragen, mit welchem mithin dieselben Vorteile erhalten werden können. Insbesondere weist das Kraftfahrzeug Fahrzeugsysteme auf, deren Funktionen auf das Umgebungsmodell und insbesondere auch auf auf Fahrwerksdaten zurückgehende Informationen zugreifen. Dann können beispielsweise Warnungen vor Beschädigungen und/oder Beschädigungen vermeidende Fahreingriffe ermittelt und durchgeführt werden.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Fahrsituation,
- Fig. 2: eine Ansicht des Vorderrades während der Fahrsituation, und
- Fig. 3: ein erfindungsgemäßes Kraftfahrzeug.

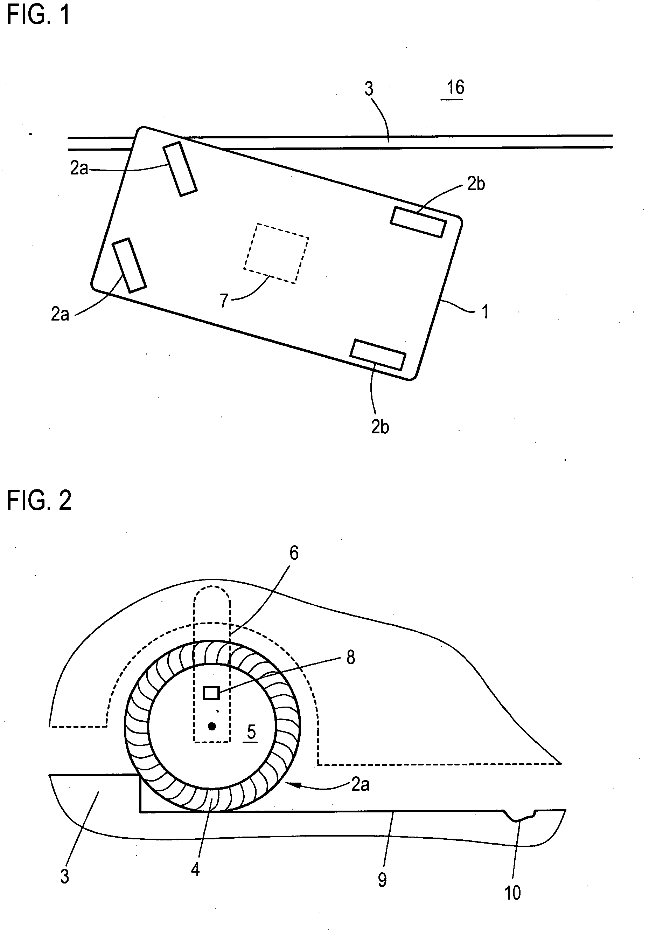

Fig. 1 zeigt eine Fahrsituation, mithilfe derer das erfindungsgemäße Verfahren näher erläutert werden soll. Ein erfindungsgemäßes Kraftfahrzeug 1, das vier Räder 2a, 2b mit entsprechenden Reifen aufweist, schickt sich gerade an, einen Bordstein 3 zum Zweck des Parkens zu überfahren, wobei schließlich die rechten Räder 2a, 2b auf dem Gehweg 16 platziert werden sollen. Ersichtlich befindet sich durch den Lenkvorgang das den Bordstein 3 zunächst überfahrende Rad 2a in fast rechtem Winkel zum Bordstein 3. Dies ist in Fig. 2 näher gezeigt, wo das Vorderrad 2a mit dem Reifen 4 und der Felge 5 zu Beginn des Überfahrens des Bordsteins 3 gezeigt ist. Eine Radaufhängung 6 trägt, wie grundsätzlich bekannt, das Rad 2a.

Nachdem das Kraftfahrzeug 1 nun auch ein aktives Fahrwerksystem 7, wie in Fig. 1 angedeutet, aufweist, ist dieses auch mit einer Fahrwerkssenorik versehen, von der hier nur beispielhaft in Fig. 2 der Höhenstandssensor 8 gezeigt ist.

Überfährt das Rad 2a in (hier unkritischem) Winkel nun den Bordstein 3, können über den Höhenstandsensor 8 sowie gegebenenfalls weitere Sensoren der Fahrwerkssensorik des Fahrwerksystems 7 Fahrwerksdaten aufgenommen bzw. abgeleitet werden, die Höhenunterschiede des befahrenen Untergrund 9 beschreiben, mithin auch die Höhe des Bordsteins 3. Nachdem ferner bekannt ist, wo sich das Rad 2a befindet und in welcher Stellung es sich befindet, können entsprechend aufgenommene Fahrwerksdaten, die Höhenunterschiede des befahrenen Untergrunds 9 beschreiben, zur Verbesserung eines Umgebungsmodells des Kraftfahrzeugs 1 eingesetzt werden. Hierzu werden diese Fahrwerksdaten über ein entsprechendes Bussystem des Kraftfahrzeugs 1 an ein Steuergerät für eine Sensordatenfusion übermittelt, wo das Umgebungsmodell des Kraftfahrzeugs 1 erstellt und aktuell gehalten wird. Dies geschieht vorliegend auch unter Verwendung der Fahrwerksdaten.

Damit ist es möglich, dem Bordstein 3 oder auch anderen Merkmalen des befahrenen Untergrunds 9, beispielsweise einem Schlagloch 10, verbesserte Höheninformationen zuzuordnen, die bezüglich einer Beschädigungsgefahr für das Kraftfahrzeug und/oder eines unkomfortablen Fahrens durch Funktionen anderer Fahrzeugsysteme ausgewertet werden können. Wird das Beispiel der Fig. 1 weiter betrachtet, ist aufgrund des Parkvorgangs davon auszugehen, dass der Fahrer so weiter lenken wird, dass das Kraftfahrzeug mit den rechten Rädern 2a, 2b auf dem Gehweg 4 zu stehen kommt. Dabei wird das rechte Hinterrad 2b in einem ungünstigeren Winkel auf den Bordstein 3 treffen, der gegebenenfalls eine Beschädigung des Reifens 4, der Felge 5 oder der Karosserie des Kraftfahrzeugs 1 zur Folge haben kann. Wird eine Gefährdungsgefahr festgestellt, kann beispielsweise durch das die entsprechende Funktion durchführende Fahrzeugsystem eine Warnung an einen Fahrer ausgegeben werden und/oder ein Fahreingriff bestimmt werden, der einen günstigeren Winkel herstellt und/oder ein Überfahren des Bordsteins durch das rechte Hinterrad 2b vermeidet.

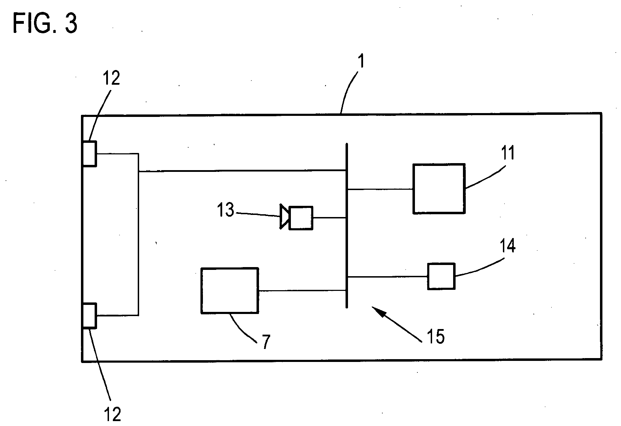

Fig. 3 zeigt eine Prinzipskizze des erfindungsgemäßen Kraftfahrzeugs 1. Dieses weist neben dem bereits erwähnten Fahrwerksystem 7 auch das bereits erwähnte Steuergerät 11 auf, in dem Umgebungsdaten von einer Vielzahl von Umgebungssensoren, wobei hier nur beispielhaft Frontradarsensoren 12 und eine Frontkamera 13 gezeigt sind, und einem Navigationssystem 14, beispielsweise digitale Kartendaten, neben den Fahrwerksdaten des Fahrwerksystems 7 empfangen werden, um sie zu einem Umgebungsmodell des Kraftfahrzeugs 1 zu fusionieren. Die Übermittlung erfolgt dabei über den hier nur schematisch dargestellten Fahrzeugbus 15. Das Steuergerät 11 ist mithin zur Durchführung des erfindungsgemäßen Verfahrens ausgebildet.

Es sei noch darauf hingewiesen, dass es selbstverständlich auch denkbar ist, dass mehrere Steuergeräte 11 zur Erstellung eines Umgebungsmodells zusammenwirken.

## Patentansprüche

1. Verfahren zum Betrieb eines Kraftfahrzeugs (1), wobei in einem Steuergerät (11) die Umgebung des Kraftfahrzeugs (1) beschreibende Umgebungsdaten, insbesondere Sensordaten, zu einem die Umgebung des Kraftfahrzeugs (1) beschreibenden Umgebungsmodell in Form einer Belegungskarte und/oder einer objektbasierten Beschreibung, welche zumindest die Position und die Ausdehnung eines jeweiligen Objekts beschreibt, fusioniert werden, wobei in die Ermittlung des Umgebungsmodells Höhenunterschiede des von dem Kraftfahrzeug (1) befahrenen Untergrundes (9) beschreibende, von einem Fahrwerksystem (7) des Kraftfahrzeugs (1) ermittelte Fahrwerksdaten eingehen, wobei wenigstens eine aus den Fahrwerksdaten abgeleitete, auf ein Merkmal des Untergrunds (9) bezogene Information des Umgebungsmodells zur Warnung des Fahrers vor einem Überfahren des Merkmals mit wenigstens einem Rad (2a, 2b) und/oder zur Verhinderung und/oder Optimierung des Überfahrens des Merkmals durch wenigstens einen Fahreingriff ausgewertet wird.

2. Verfahren nach Anspruch 1,
**dadurch gekennzeichnet,**
**dass** die Fahrwerksdaten für ein Merkmal des Untergrunds (9) beim Überfahren des Merkmals mit wenigstens einem Rad (2a, 2b) des Kraftfahrzeugs (1) ermittelt werden.

3. Verfahren nach Anspruch 2,
**dadurch gekennzeichnet,**
**dass** eine Ortszuordnung der Fahrwerksdaten aus bekannten Positionsdaten des überfahrenden Rads (2a) ermittelt wird.

4. Verfahren nach einem der vorangehenden Ansprüche,
**dadurch gekennzeichnet,**
**dass** eine aus den Fahrwerksdaten abgeleitete Information von wenigstens einer auf eine Vermeidung von Beschädigungen des Kraftfahrzeugs (1), insbesondere der Reifen (4), und/oder zum wenigstens teilweise autonomen Betrieb des Kraftfahrzeugs (1) ausgebildeten Funktion eines Fahrzeugsystems des Kraftfahrzeugs (1) auswertet wird.

5. Verfahren nach einem der vorangehenden Ansprüche,
**dadurch gekennzeichnet,**
**dass** die Fahrwerksdaten aus Sensordaten wenigstens eines Höhenstandsensors (8) des Fahrwerksystems (7) und/oder eines eine vertikale Beschleunigung messenden Beschleunigungssensors des Fahrwerksystems (7) ermittelt werden.

6. Verfahren nach einem der vorangehenden Ansprüche,
**dadurch gekennzeichnet,**
**dass** die Fahrwerksdaten zur Korrektur der Höhe eines Objekts, insbesondere eines Bordsteins (3), in dem Umgebungsmodell verwendet werden.

7. Kraftfahrzeug (1), aufweisend wenigstens ein zur Durchführung eines Verfahrens nach einem der vorangehenden Ansprüche ausgebildetes Steuergerät (11).

## Claims

1. Method for operating a motor vehicle (1), wherein in a control device (11) environmental data describing the environment of the motor vehicle (1), in particular sensor data, are combined into an environmental model describing the environment of the motor vehicle (1) in the form of a layout plan and/or an object-based description, which describes at least the position and the dimensions of a respective object, wherein chassis data describing height differences of the ground (9) driven over by the motor vehicle (1) and determined by a chassis system (7) of the motor vehicle (1) are included in the establishment of the environmental model, wherein at least one piece of information from the environment model derived from the chassis data and relating to a feature of the ground (9) is evaluated for warning the driver before driving over the feature with at least one wheel (2a, 2b) and/or for preventing and/or optimising driving over the feature by at least one driving operation.

2. Method according to claim 1,
**characterised in that**
the chassis data is determined for a feature of the ground (9) for driving over the feature with at least one wheel (2a, 2b) of the motor vehicle (1).

3. Method according to claim 2,
**characterised in that**
an identification of the location of the chassis data is determined from known position data of the wheel (2a) driving over.

4. Method according to any of the preceding claims,
**characterised in that**
information derived from the chassis data of at least one function of a vehicle system of the motor vehicle (1) is evaluated for avoiding damage to the motor vehicle (1), in particular the tyres (4), and/or for the at least partial autonomous operation of the motor vehicle (1).

5. Method according to any of the preceding claims,
**characterised in that**
the chassis data are determined from sensor data of at least one level sensor (8) of the chassis systems (7) and/or an acceleration sensor of the vehicle system (7) measuring vertical acceleration.

6. Method according to any of the preceding claims,
**characterised in that**
the chassis data are used in the environmental model for correcting the height of an object, in particular a curb (3).

7. Motor vehicle (1) comprising at least one control device (11) designed for carrying out a method according to any of the preceding claims.

## Revendications

1. Procédé de fonctionnement d'un véhicule automobile (1), dans lequel, dans un appareil de commande (11), des données d'environnement décrivant l'environnement du véhicule automobile (1), en particulier des données de capteur, sont fusionnées en un modèle d'environnement décrivant l'environnement du véhicule automobile (1) sous la forme d'une carte d'occupation et/ou d'une description basée sur un objet qui décrivent au moins la position et l'extension d'un objet respectif, dans lequel entrent dans la détermination du modèle d'environnement des données de châssis qui décrivent des différences de hauteur du sol (9), sur lequel le véhicule automobile (1) roule, et qui sont déterminées par un système de châssis (7) du véhicule automobile (1), dans lequel au moins une information du modèle d'environnement qui est déduite des données de châssis et qui se rapporte à une caractéristique du sol (9) est évaluée dans le but d'avertir le conducteur avant qu'au moins une roue (2a, 2b) passe sur ladite caractéristique et/ou d'empêcher et/ou d'optimiser le passage sur ladite caractéristique par au moins une intervention de conduite.

2. Procédé selon la revendication 1, **caractérisé en ce que** les données de châssis sont déterminées pour une caractéristique du sol (9) lorsque au moins une roue (2a, 2b) du véhicule automobile (1) passe sur ladite caractéristique.

3. Procédé selon la revendication 2, **caractérisé en ce qu'**une attribution locale des données de châssis est déterminée à partir des données de position connues de la roue (2a) qui passe.

4. Procédé selon l'une quelconque des revendications précédentes, **caractérisé en ce qu'**une information déduite des données de châssis est évaluée par au moins une fonction, conçue afin d'éviter des dommages au véhicule automobile (1), en particulier aux pneus (4), et/ou en vue du fonctionnement au moins partiellement autonome du véhicule automobile (1), d'un système de véhicule du véhicule automobile (1).

5. Procédé selon l'une quelconque des revendications précédentes, **caractérisé en ce que** les données de châssis sont déterminées à partir de données de capteur d'au moins un capteur de hauteur (8) du système de châssis (7) et/ou d'un capteur d'accélération, mesurant une accélération verticale, du système de véhicule (7).

6. Procédé selon l'une quelconque des revendications précédentes, **caractérisé en ce que** les données de châssis sont utilisées dans le but de corriger la hauteur d'un objet, en particulier d'une bordure de trottoir (3), dans le modèle d'environnement.

7. Véhicule automobile (1), comportant au moins un appareil de commande (11) conçu pour la mise en oeuvre d'un procédé selon l'une quelconque des revendications précédentes.
